# EUROPÄISCHE PATENTANMELDUNG

(11) **EP 4 195 435 A1**
(43) Veröffentlichungstag der Anmeldung: **14.06.2023**
(21) Anmeldenummer: 21213957.0
(22) Anmeldetag: 13.12.2021
(51) Int. Cl.: H02H 9/04, H02M 3/156, G05F 1/571, H02H 7/18, H02J 7/00

(54) **SCHUTZSCHALTUNG FÜR EINE SIMULIERTE BATTERIEZELLE**

(71) Anmelder: dSPACE GmbH, 33102 Paderborn (DE)
(72) Erfinder: Gruber, Paul, 33102 Paderborn (DE)

(57) **Zusammenfassung**

Gegenstand der Erfindung ist eine Schutzschaltung für eine simulierte Batteriezelle (1) aufweisend die simulierte Batteriezelle (1) mit einem Ausgang (6) aufweisend eine Ausgangsspannung, wenigstens einen MOSFET (2), der an den Ausgang (6) der simulierten Batteriezelle (1) zum Kurzschließen desselben angeschlossen ist, einen Kondensator (3), der an eine Gate-Elektrode (7) des wenigstens einen MOSFETs (2) angeschlossen ist, eine Überspannungserkennungseinrichtung (4), eingerichtet, um bei einem Überschreiten eines Überspannungsgrenzwertes der Ausgangsspannung den Kondensator (3) mit der Ausgangsspannung aufzuladen, und eine Schwellwertspannungserkennungseinrichtung (5), eingerichtet, um bei einem Unterschreiten eines Schwellwertes einer Spannung an dem Kondensator (3) die Gate-Elektrode (7) freizugeben.

## Beschreibung

### Technisches Gebiet

Die Erfindung betrifft eine Schutzschaltung für eine simulierte Batteriezelle aufweisend die simulierte Batteriezelle mit einem Ausgang aufweisend eine Ausgangsspannung.

### Hintergrund der Erfindung

Für computergesteuerte Testsysteme, die zusammen mit einem zugeordneten zu testenden System einen geschlossenen Regelkreis bilden, also sogenannte Hardware-in-the-Loop-Testsysteme, abgekürzt HIL-Testsysteme oder HIL-Simulatoren, vorgesehen insbesondere für den Tests von Batteriemanagementsystemen, abgekürzt BMS, sind sogenannte "Battery Cell Voltage Emulation Boards", also Batteriezellenspannungs-Emulations-Baugruppen, abgekürzt BCVEB, bekannt, die eine Emulation oder Simulation von Hochspannungsbatterien auf Zellebene ermöglichen. Derartige BCVEB (Battery Cell Voltage Emulation Boards) emulieren oder simulieren eine regelbare, hochgenaue Klemmenspannung für einzelne Batteriezellen. Je nach Batterietyp und Testfokus können mehrere Boards, also mehrere Baugruppen, in einem HIL-System eingesetzt werden.

Eine solche Simulation kann mehrere Hundert in Reihe geschaltete Batteriezellen mit einer Gesamtspannung über 1000 V enthalten. In dem vorherigen Satz und im nachfolgenden Text ist der der Begriff einer "Batteriezelle" als eine "simulierte Batteriezelle" auszulegen, soweit nicht etwas anderes in dem jeweiligen Kontext angegeben ist. Ein angeschlossenes Kundensystem kann aus jeder Batteriezelle eines derartigen Simulators Energie entnehmen oder auch einspeisen, häufig, um Ladungsausgleichs-Vorgänge bzw. Ladungsausgleichs-Abläufe (sogenanntes "Charge Balancing") in einem Kundensystem, insbesondere in dessen enthaltenen Schaltungen zu testen. Die Einspeisung, sowie Fehlfunktionen im Simulator oder Kundensystem, können im Simulator jedoch zu unzulässig hohen Zellspannungen und Verlustleistungen führen, was Folgeschäden im Simulator bedingen kann.

Ein gewöhnliches Abregeln einer Quelle bei Überlast kann auf eine Senke jedoch nicht übertragen werden. Denn ein Öffnen einer überlasteten Batteriezelle wäre bei einer hohen Gesamtspannung nachteilhaft bezüglich Folgeschäden und schaltungstechnisch wesentlich aufwendiger. Auch ein technischer Defekt oder Ausfall einer einzelnen Batteriezelle des Simulators kann im noch laufenden Gesamtsystem zu einer Überspannung dieser Batteriezelle und damit zu weiteren Schäden im Simulator führen.

### Beschreibung der Erfindung

Ausgehend von dieser Situation ist es eine Aufgabe der vorliegenden Erfindung, den Stand der Technik weiterzubilden. Bevorzugt ist eine Schutzschaltung für eine simulierte Batteriezelle bereitzustellen, die die vorbeschriebenen Probleme löst.

Die Aufgabe der Erfindung wird durch die Merkmale der unabhängigen Ansprüche gelöst. Vorteilhafte Ausgestaltungen sind in den abhängigen Ansprüchen angegeben.

Demnach wird die Aufgabe gelöst durch eine Schutzschaltung für eine simulierte Batteriezelle aufweisend
die simulierte Batteriezelle mit einem Ausgang aufweisend eine Ausgangsspannung,
wenigstens einen MOSFET, der an den Ausgang der simulierten Batteriezelle zum Kurzschließen desselben angeschlossen ist,
einen Kondensator, der an eine Gate-Elektrode des wenigstens einen MOSFETs angeschlossen ist,
eine Überspannungserkennungseinrichtung, eingerichtet, um bei einem Überschreiten eines Überspannungsgrenzwertes der Ausgangsspannung den Kondensator mit der Ausgangsspannung aufzuladen, und
eine Schwellwertspannungserkennungseinrichtung, eingerichtet bei einem Unterschreiten eines Schwellwertes einer Spannung an dem Kondensator die Gate-Elektrode freizugeben.

Durch die vorgeschlagene Schutzschaltung, auch Klemmschaltung oder Crowbar genannt, erlaubt einen äußerst effektiven Schutz eines Simulators gegen Folgeschäden aufgrund von unzulässig hohen Zellspannungen der Batteriezelle. Denn durch den wenigstens einen MOSFET lässt sich die simulierte Batteriezelle bei Vorliegen des Überspannungsgrenzwertes kurzschließen. Dazu überwacht die Schutzschaltung die Ausgangsspannung der simulierten Batteriezelle. Bei Überschreiten des Überspannungsgrenzwertes wird der Kondensator geladen, welcher in der Folge die Gate-Elektrode des wenigstens einen MOSFET ansteuert. Der wenigstens eine MOSFET ist parallel zu dem Ausgang der Batteriezelle geschaltet, sodass durch Ansteuern der Gate-Elektrode die Batteriezelle kurzgeschlossen wird. Da sich der Kondensator nur langsam, innerhalb eines durch die Schaltungsanordnung beeinflussten Entladezeit-Intervalls, entlädt, gibt die Schwellwertspannungserkennungseinrichtung die Gate-Elektrode wieder frei, bevor der wenigstens eine MOSFET bei abfallender Gate-Spannung in einen teilweise leitenden Betrieb übergeht, der mit relativ hoher Verlustleistung einhergehen würde. In der Folge kann die Ausgangsspannung wieder über den Überspannungsgrenzwert ansteigen, sodass der vorbeschriebene Zyklus erneut beginnen kann. Durch die vorgeschlagene Schutzschaltung wird kein Öffnen einer überlasteten Batteriezelle mehr benötigt, was Folgeschäden nach sich ziehen kann und schaltungstechnisch wesentlich aufwendiger als die vorgeschlagene Schutzschaltung zu realisieren wäre.

Die Schutzschaltung lässt sich insbesondere für sogenannte Hardware-in-the-Loop-Simulatoren, auch HIL-Systeme, für Testsvorrichtungen von Batteriemanagementsystemen, BMS, und konkret für sogenannte "Battery Cell Voltage Emulation Boards", selten als "Batteriezellspannungs-Emulationsbaugruppe" bezeichnet, verwenden, die eine Simulation von Hochspannungsbatterien auf Zellebene ermöglichen. Dabei kann die Schutzschaltung eine Mehrzahl von in Reihe geschalteter Batteriezellen enthalten, beispielsweise drei oder vier in Reihe geschalteter Batteriezellen, die durch den wenigstens einen MOSFET kurzschließbar sind. Ebenso kann jede einzelne Batteriezelle mit der vorgeschlagenen Schutzschaltung versehen sein. Ein an die Schutzschaltung angeschlossenes Kundensystem kann aus jeder Batteriezelle eines derartigen Simulators Energie in typischen Anwendungen zum Zwecke des Ladungsausgleichs entnehmen oder auch einspeisen. Die letztgenannten Anwendungen werden häufig als "Charge Balancing" oder "Battery Balancing", seltener als "Batterieladungs-Ausgleich", bezeichnet.

Als Batteriezellen lassen sich eine Vielzahl aus dem Stand der Technik bekannter simulierter Batteriezellen verwenden. Der wenigstens eine MOSFET ist bevorzugt mit seinen Drain- und Source-Elektroden parallel zum Ausgang geschaltet. Der Kondensator ist bevorzugt angeordnet, die Gate-Elektrode anzusteuern. Der Kondensator ist bevorzugt durch die simulierte Batteriezelle aufladbar, insbesondere unabhängig von sonstigen verfügbaren Betriebsspannungen. Dazu ist der Kondensator hinsichtlich seiner Kapazität bevorzugt ausgestaltet, zumindest für eine begrenzte Zeit Energie zum Ansteuern der Gate-Elektrode bereitzustellen. Der Überspannungsgrenzwert kann beispielsweise 9 V betragen, während der Schwellwert 4 V betragen kann. Besonders bevorzugt ist der Kondensator via der Schwellwertspannungserkennungseinrichtung mit der Gate-Elektrode verbunden. Freigeben der Gate-Elektrode bedeutet insbesondere, diese beispielsweise auf ein Source-Potential des MOSFETs zu ziehen, so dass der MOSFET nicht mehr leitend ist, also den Ausgang nicht mehr kurzschließt.

Nach einer bevorzugten Fortbildung weist die Schutzschaltung zwei gegensinnig in Reihe geschalteter MOSFETs auf, wobei der Kondensator an jeweilige Gate-Elektroden der zwei MOSFETs angeschlossen ist und die Schwellwertspannungserkennungseinrichtung eingerichtet ist, bei dem Unterschreiten des Schwellwertes der Spannung an dem Kondensator die Gate-Elektroden freizugeben. Bevorzugt sind die jeweiligen Source-Elektroden der MOSFETs miteinander verbunden, so dass die jeweiligen Drain-Elektroden parallel zu dem Ausgang geschaltet sind. Besonders bevorzugt ist eine Elektrode des Kondensators via Schwellwertspannungserkennungseinrichtung mit beiden Gate-Elektroden verbunden und die andere Elektrode des Kondensators mit den beiden Source-Elektroden verbunden.

Gemäß einer anderen bevorzugten Weiterbildung ist die Schwellwertspannungserkennungseinrichtung als Hysterese-Schaltung ausgeführt. Bevorzugt ist die Hysterese-Schaltung als Schmitt-Trigger und/oder als diskrete Schaltung mit bipolaren Transistoren ausgestaltet. Beispielsweise können zwei sich gegenseitig ansteuernde Transistoren vorgesehen sein, wobei die Basis bzw. der Kollektor des einen Transistors über einen jeweiligen Widerstand mit dem Emitter bzw. der Basis des anderen Transistors verbunden ist.

Nach einer weiteren bevorzugten Ausgestaltung ist zwischen der Schwellwertspannungserkennungseinrichtung und dem wenigstens einen MOSFET ein Gate-Treiber zum Ansteuern der Gate-Elektrode vorgesehen. Der Gate-Treiber weist bevorzugt eine Kombination von zwei Transistoren zum Ansteuern der Gate-Elektrode auf, insbesondere einen n-Kanal-Transistor und einen p-Kanal-Transistor, deren Emitter mit der Gate-Elektrode verbunden sind.

Gemäß einer anderen bevorzugten Weiterbildung weist die Schutzschaltung eine an die Gate-Elektrode angeschlossene Statusleitung zum Übermitteln eines Status der Schutzschaltung an einen FPGA und/oder an eine Auswerteschaltung auf. Durch eine derartige Statusleistung lässt sich in einfacher Weise der Status der Schutzschaltung auslesen, also ob die vorgeschlagene Schutzschaltung den Ausgang kurzschließt oder nicht.

Nach einer weiteren bevorzugten Ausgestaltung umfasst die Schutzschaltung eine an die Überspannungserkennungseinrichtung angeschlossene Auslöseleitung zum Beaufschlagen des Grenzwertes auf die Überspannungserkennungseinrichtung. Derart lassen sich unabhängig von einem Vorliegen des Überspannungsgrenzwertes die Gate-Elektrode durch den Kondensator mit Spannung beaufschlagen, um den Ausgang kurzzuschließen.

Gemäß einer anderen bevorzugten Weiterbildung ist die Überspannungserkennungseinrichtung eingerichtet, eine Überschreitung eines positiven und negativen Überspannungsgrenzwertes der Ausgangsspannung zu erkennen und bei betragsmäßigem Überschreiten den Kondensator mit der Ausgangsspannung aufzuladen. Das bedeutet, dass die Schutzschaltung auch bei einem negativen Überspannungsgrenzwert ein Kurzschließen des Ausgangs bewirken kann.

Die Aufgabe der Erfindung wird weiterhin gelöst durch ein Verfahren zum Schützen einer durch eine simulierten Batteriezelle gespeisten Simulationsvorrichtung mit den Schritten:
bei einem Überschreiten eines Überspannungsgrenzwertes einer Ausgangsspannung eines Ausgangs der simulierten Batteriezelle, Aufladen eines Kondensators mit der Ausgangsspannung, wobei der Kondensator an eine Gate-Elektrode wenigstens eines MOSFET angeschlossen ist und wobei der wenigstens eine MOSFET an den Ausgang zum Kurzschließen desselben angeschlossen ist, und
bei einem Unterschreiten eines Schwellwertes einer Spannung an dem Kondensator, Freigeben der Gate-Elektrode.

Durch das Freigeben der Gate-Elektrode des MOSFETs wird der MOSFET nichtleitend.

Weitere Ausführungsform und Vorteile des Verfahrens ergeben sich für den Fachmann in Analogie zu der zuvor beschriebenen Schutzschaltung.

### Kurze Beschreibung der Zeichnungen

Nachfolgend wird die Erfindung unter Bezugnahme auf die anliegenden Zeichnungen anhand bevorzugter Ausführungsbeispiele näher erläutert.

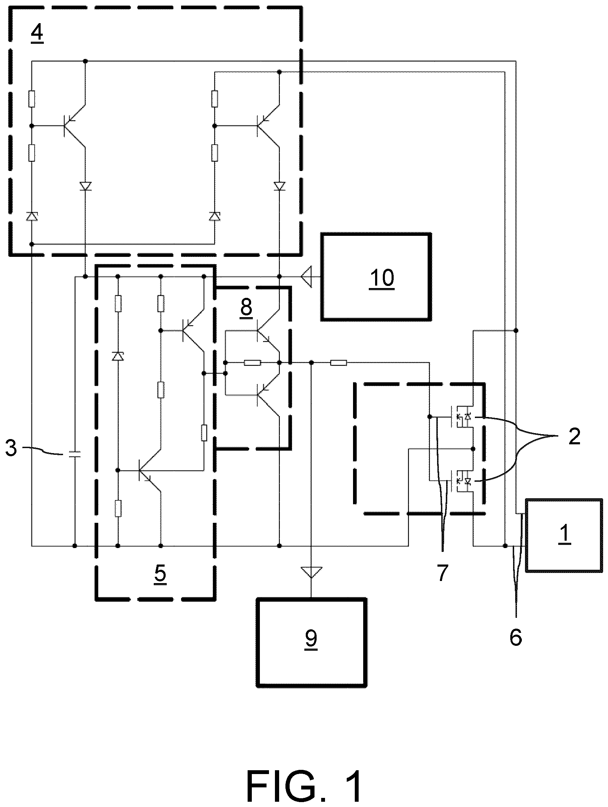

In der Zeichnung gemäß Figur 1 ist dargestellt:
eine Schutzschaltung für eine simulierte Batteriezelle als Schaltplan gemäß einem bevorzugten Ausführungsbeispiel der Erfindung.

### Detaillierte Beschreibung der Ausführungsbeispiele

Fig. 1 zeigt eine Schutzschaltung für eine simulierte Batteriezelle 1 als Schaltplan gemäß einem bevorzugten Ausführungsbeispiel der Erfindung. Die Schutzschaltung weist neben der simulierten Batteriezelle 1 wenigstens einen MOSFET 2, einen Kondensator 3, eine Überspannungserkennungseinrichtung 4 und eine Schwellwertspannungserkennungseinrichtung 5 auf. Wenn in Fig. 1 nur eine simulierte Batteriezelle 1 gezeigt ist, kann die Schutzschaltung mehrere in Reihe geschaltete Batteriezellen 1 überspannen und schützen.

Eine Gesamtspannung über alle Batteriezellen 1 eines Simulators mit ihrer jeweiligen erfindungsgemäßen Schutzschaltung jeder Batteriezelle 1 bzw. pro Gruppe mit einer kleinen Anzahl Batteriezellen 1 kann durchaus über 1000 V ergeben.

Ein eine Ausgangsspannung aufweisender Ausgang 6 der simulierten Batteriezelle 1 ist mit der Überspannungserkennungseinrichtung 4 verbunden. Die Überspannungserkennungseinrichtung 4 weist zwei in der Fig. 1 nicht näher bezeichnete Transistoren auf, deren Emitter durch die Ausgangsspannung gespeist werden. Der jeweilige Kollektor der Transistoren ist über eine jeweilige Diode mit einer Elektrode des Kondensator 3 verbunden, wobei die an Anode der Diode dem Kollektor zugewandt ist. Die Basis der Transistoren wird jeweils über einen Widerstand gespeist, der mit einem weiteren Widerstand und der Kathode einer jeweiligen Z-Diode in Reihe geschaltet ist. Derart wird bei einem Überschreiten eines Überspannungsgrenzwertes der Ausgangsspannung, beispielsweise 9 V, der Kondensator 3 durch die Überspannungserkennungseinrichtung 5 mit der Ausgangsspannung aufgeladen.

Der Kondensator 3 ist über die Schwellwertspannungserkennungseinrichtung 5 an eine Gate-Elektrode 7 des wenigstens einen MOSFET 2 angeschlossen. Vorliegend sind zwei gegensinnig in Reihe geschalteter MOSFETs 2 vorgesehen, deren jeweilige Gate-Elektroden 7 über die Schwellwertspannungserkennungseinrichtung 5 durch den Kondensator 3 speisbar sind. Der wenigstens eine MOSFET 2 bzw. vorliegend die zwei gegensinnig in Reihe geschaltete MOSFETs 2 sind an den Ausgang 6 der simulierten Batteriezelle 1 angeschlossen, so dass der Ausgang 6 kurzschließbar ist.

Die Schwellwertspannungserkennungseinrichtung 5 ist als Hysterese-Schaltung mit zwei gegenseitig steuernden Transistoren ausgeführt, wobei die Basis bzw. der Kollektor des einen Transistors über einen jeweiligen Widerstand mit dem Emitter bzw. der Basis des anderen Transistors verbunden sind. Derart ist die Schwellwertspannungserkennungseinrichtung 6 eingerichtet, bei einem Unterschreiten eines Schwellwerteseiner Spannung an dem Kondensator 3, beispielsweise 4 V, die Gate-Elektroden 7 freizugeben. Ferner ist zwischen der Schwellwertspannungserkennungseinrichtung 5 und den beiden MOSFETs 2 ein Gate-Treiber 8 aufweisend eine Kombination von zwei Transistoren zum Ansteuern der Gate-Elektroden 7 vorgesehen.

Die Schutzschaltung weist ferner eine an die Gate-Elektroden 7 angeschlossenen Statusleitung 9 zum Übermitteln eines Status der Schutzschaltung an einen FPGA und/oder an eine Auswerteschaltung sowie eine an die Überspannungserkennungseinrichtung 4 angeschlossenen Auslöseleitung 10 zum Beaufschlagen des Grenzwertes auf die Überspannungserkennungseinrichtung 4 auf.

Zusammengefasst beinhaltet die zuvor beschriebene Schutzschaltung die zwei gegensinnig in Reihe geschalteten MOSFETs 2, die den Ausgang 6 der Batteriezelle 1 im Regelfall nicht oder in vernachlässigbarem Umfang belasten, im Fehlerfall aber kurzschließen können. Die Schutzschaltung überwacht die Ausgangsspannung am Ausgang 6 der Batteriezelle 1. Bei Überschreiten des Überspannungsgrenzwertes, sei es positiv oder negativ, wird der Kondensator 3 aufgeladen und durch diesen die Gate-Elektroden 7 der beiden MOSFETs angesteuert. Die Batteriezelle 1 wird dadurch kurzgeschlossen.

Da sich der Kondensator 3 nur langsam entlädt, gibt die Schwellwertspannungserkennungseinrichtung 5 mit Hysteresefunktion die Gate-Elektroden 7 wieder frei, bevor die MOSFETs 2 bei abfallender Gatespannung in einen teilweise leitenden Betrieb übergehen, der mit viel Verlustleistung einhergehen würde. Die Zellenspannung der Batteriezelle 1 kann wieder über den Überspannungsgrenzwert ansteigen und der vorbeschriebene Zyklus beginnt nach beispielsweise 11 ms erneut.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**B ezugszei chenli ste**

| | |
|---|---|
| Simulierte Batteriezelle | 1 |
| MOSFET | 2 |
| Kondensator | 3 |
| Überspannungserkennungseinrichtung | 4 |
| Schwellwertspannungserkennungseinrichtung | 5 |
| Ausgang | 6 |
| Gate-Elektrode | 7 |
| Gate-Treiber | 8 |
| Statusleitung | 9 |
| Auslöseleitung | 10 |

## Patentansprüche

1. Schutzschaltung für eine simulierte Batteriezelle (1) aufweisend
die simulierte Batteriezelle (1) mit einem Ausgang (6) aufweisend eine Ausgangsspannung,
wenigstens einen MOSFET (2), der an den Ausgang (6) der simulierten Batteriezelle (1) zum Kurzschließen desselben angeschlossen ist,
einen Kondensator (3), der an eine Gate-Elektrode (7) des wenigstens einen MOSFETs (2) angeschlossen ist,
eine Überspannungserkennungseinrichtung (4), eingerichtet, um bei einem Überschreiten eines Überspannungsgrenzwertes der Ausgangsspannung den Kondensator (3) mit der Ausgangsspannung aufzuladen, und
eine Schwellwertspannungserkennungseinrichtung (5), eingerichtet bei einem Unterschreiten eines Schwellwertes einer Spannung an dem Kondensator (3) die Gate-Elektrode (7) freizugeben.

2. Schutzschaltung nach dem vorhergehenden Anspruch, mit zwei gegensinnig in Reihe geschalteter MOSFETs (2), wobei der Kondensator (3) an jeweilige Gate-Elektroden (7) der zwei MOSFETs (2) angeschlossen ist und die Schwellwertspannungserkennungseinrichtung (5) eingerichtet ist, bei dem Unterschreiten des Schwellwertes der Spannung an dem Kondensator (3) die Gate-Elektroden (7) freizugeben.

3. Schutzschaltung nach einem der vorhergehenden Ansprüche, wobei die Schwellwertspannungserkennungseinrichtung (5) als Hysterese-Schaltung ausgeführt ist.

4. Schutzschaltung nach einem der vorhergehenden Ansprüche, wobei zwischen der Schwellwertspannungserkennungseinrichtung (5) und dem wenigstens einen MOSFET (2) ein Gate-Treiber (8) zum Ansteuern der Gate-Elektrode (7) vorgesehen ist.

5. Schutzschaltung nach einem der vorhergehenden Ansprüche, mit einer an die Gate-Elektrode (7) angeschlossenen Statusleitung (9) zum Übermitteln eines Status der Schutzschaltung an einen FPGA und/oder an eine Auswerteschaltung.

6. Schutzschaltung nach einem der vorhergehenden Ansprüche, mit einer an die Überspannungserkennungseinrichtung (4) angeschlossenen Auslöseleitung (10) zum Beaufschlagen des Grenzwertes auf die Überspannungserkennungseinrichtung (4).

7. Schutzschaltung nach einem der vorhergehenden Ansprüche, wobei die Überspannungserkennungseinrichtung (4) eingerichtet ist, eine Überschreitung eines positiven und negativen Überspannungsgrenzwertes der Ausgangsspannung zu erkennen und bei betragsmäßigem Überschreiten den Kondensator (3) mit der Ausgangsspannung aufzuladen.

8. Verfahren zum Schützen einer durch eine simulierten Batteriezelle (1) gespeisten Simulationsvorrichtung mit den Schritten:
bei einem Überschreiten eines Überspannungsgrenzwertes einer Ausgangsspannung eines Ausgangs (6) der simulierten Batteriezelle (1), Aufladen eines Kondensators (3) mit der Ausgangsspannung, wobei der Kondensator (3) an eine Gate-Elektrode (7) wenigstens eines MOSFETs (2) angeschlossen ist und wobei der wenigstens eine MOSFET (2) an den Ausgang (6) zum Kurzschließen desselben angeschlossen ist, und
bei einem Unterschreiten eines Schwellwertes einer Spannung an dem Kondensator (3), Freigeben der Gate-Elektrode (7).
